Europäisches Patentamt

European Patent Office

Office européen des brevets

(19)

(11) **EP 1 531 394 A2**

(12) # EUROPEAN PATENT APPLICATION

(43) Date of publication:
**18.05.2005 Bulletin 2005/20**

(51) Int Cl.7: **G06F 9/54**

(21) Application number: **04254897.4**

(22) Date of filing: **13.08.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **25.08.2003 US 647738**

(71) Applicant: **Hewlett-Packard Development
Company, L.P.
Houston, TX 77070 (US)**

(72) Inventors:
• **Shaughnessy, Jay
Cherry Hill, NJ 08003 (US)**
• **Flocken, Philip A.
Denver, CO 80202 (US)**

(74) Representative: **Jackson, Richard Eric et al
Carpmaels & Ransford,
43-45 Bloomsbury Square
London WC1A 2RA (GB)**

(54) **Software agents incorporating message-driven beans for a J2EE computing environment**

(57)     Agent server software (11) provides for simple workflow relationships among message-initiated tasks. The agent software runs as a Java $J_2EE$ application **and** supports software agents, each of which incorporates a message-driven bean ($B_1$, $B_2$). A required invoker agent (AGI) accepts Java Messaging Service (JMS, original or as-translated from HTTP) messages requesting a goal to be accomplished. The invoker agent checks an agent-configuration file (15) to identify an agent ($AG_2$) that can accomplish the goal; if the identified agent has prerequisites that are not met by the contents of the request, the invoker agent can invoke intermediate agents to fulfill the requirements. An intermediate agent ($AG_1$) can invoke the goal-fulfilling agent once all its prerequisites are met. Each request and each agent invocation is recorded in an agent-server database ($DB_1$) so that progress is tracked and so that retries and recovery can be achieved in the event of a failure or fault.

EP 1 531 394 A2

## EP 1 531 394 A2

**Description**

BACKGROUND OF THE INVENTION

The present invention relates to data processing and, more particularly, to Java-based programming environments. A major objective of the invention is to provide a powerful and easy-to-use programming interface for a J2EE ("Java 2.0 enterprise edition") environment.

Much of modern progress is associated with the increasing prevalence of computers in almost all areas of society. Commercial entities often attempt to provide easy-to-use and entertaining interfaces for customers who access them over the Internet. To this end, certain computing languages and environments, e.g., J2EE (an enterprise "edition" of the Java programming language from Sun Microcomputers) and .net (pronounced "dot net" and available from Microsoft Corporation), allow a server computer to install compact code on a customer's computer to provide enhanced interactivity from the customer's perspective.

Providing an easy-to-use interactive interface for a customer can require a lot of communication between the customer's computer and a vendor's computer network. Commonly, synchronous messaging is used. That is, the computer receiving a message acknowledges receipt to the sender. In the meantime, the sender may be waiting for the acknowledgement. This waiting can impair computer performance in general and the illusion of real-time interaction in particular.

Asynchronous communication can improve performance in some situations by foregoing acknowledgements. However, since the sender is not informed whether a message was received, it is more important that delivery be guaranteed. The guarantee must be provided by the messaging protocol and typically involves storing messages and their deliver statuses in non-volatile memory, e.g., hard disks.

In J2EE, asynchronous communication is provided by JMS, the Java Message Service. Processing of an asynchronous JMS message is performed using "message-driven beans". The underlying J2EE application server provides for fail-safe delivery of messages to message-driven beans. In principle, the message-driven beans along with the rest of the J2EE provide a powerful programming environment for enterprise computing. On the other hand, the training required for J2EE programming can be quite extensive. This training requirement acts as a barrier to programmer's that would otherwise like to harness J2EE capabilities. In addition, due to the language's complexity, programmers must often attend to implementation details, making it hard to focus on the functions to be performed by a program. What is needed is a better access to the power of J2EE and message-driven beans for enterprise computing.

SUMMARY OF THE INVENTION

The present invention provides a software program set including software agents, an agent server, and agent-configuration data for specifying dependencies among the software agents. The configuration data is external to the software agents in that it is not explicitly coded into the software agents; for example, the configuration data can reside in a configuration file or database. Each software agent controls a respective message-driven bean. Thus, a programmer can work with the software agents instead of directly on the message-driven beans. However, unlike the message-driven beans, which interface solely with the application server, the software agents can interact with each other as specified by the configuration data.

Preferably, an invoker agent, itself a software agent, receives a request in the form of a message originating outside the agent server. The invoker agent determines which agent is required to perform a task set forth in the request. The invoker agent then determines whether there are any prerequisites for that agent that are not met by the contents of the message itself. If the prerequisites are met, the invoker agent sends a message to that agent, thereby invoking it. If there is an unmet prerequisite, the invoker agent examines the configuration data to identify an agent capable of fulfilling the prerequisite.

Assuming there is a prerequisite-filling agent that fulfills a prerequisite for the task-performing agent, the invoker agent sends a message to the former, invoking it. The prerequisite-filling agent sends the required information to the task-fulfilling agent, which can then complete the requested task. The invoker agent can handle more complex workflow arrangements such as invoking multiple agents to fulfill multiple prerequisites. Preferably, each software agent shares with the invoker agent the ability to identify its place in the workflow. Alternatively, all communication between agents can take place through the invoker agent.

The program set can also include an agent-server database. The invoker agent stores requests and data arriving with the request in the database. In addition, the status of each agent invoked to meet the request is tracked in the database. This permits each agent to determine the destination of the data it provides. Since the database preserves the state of a task, it can be used for fault tolerance—e.g. to guide retries and to recover from system failures.

The present invention permits convenient programming of applications utilizing asynchronous communication. More specifically, simple workflow arrangements more readily defined than they could be using message-driven beans directly. In addition, due to the separation of the agents from the configuration data, programming is highly modular and scalable. These and other features and advantages of the invention are apparent from the description below with reference to the following drawings.

BRIEF DESCRIPTION OF THE DRAWINGS

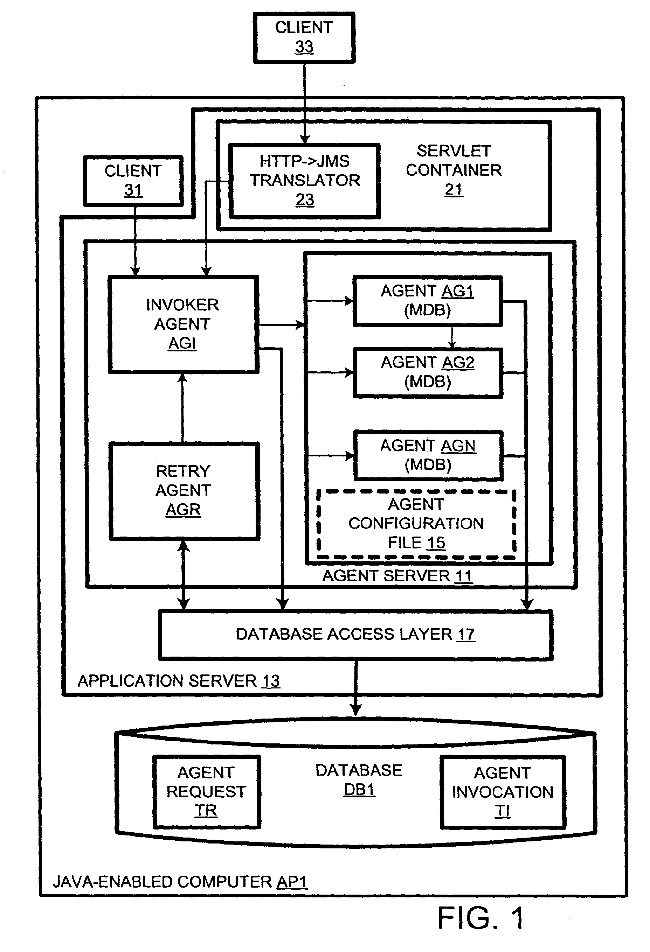

FIGURE 1 shows a Java-enabled computer system incorporating agent-server software in accordance with the present invention.

FIGURE 2 shows the structure of a pair of software agents of the agent-server software of FIG. 1.

FIGURE 3 is a flow chart of a method of the invention practiced using the system of FIG. 1.

DETAILED DESCRIPTION

In accordance with the present invention, an agent server 11 allows software agents AG1-AGN incorporating message-driven beans to run on a J2EE application server 13, which runs, in turn, on a Java-enabled computer AP1. In addition, to application-specific software agents AG1-AGN, agent server 11 has two mandatory software agents—an invoker agent AGI and a retry agent AGR. Each of the software agents AGI, AGN, and AG1-AGN incorporates a respective message-driven bean. Agent server 11 refers to an agent configuration file 15, which allows simple workflow relations to be defined among agents AG1-AGN.

In addition to running application server 13, computer AP1 supports a relational agent-server database DB1, which includes two tables required by agent server 11: an agent-request table TR, and an agent-invocation table TI. Invoker agent AGI stores all requests and any associated data in agent-request table TR. Upon invocation, each agent stores its current status in agent-invocation table TI. Each agent can access database DB1 to determine its position within the workflow required to meet with requested goal. Application server 13 provides a database access layer 17, allowing agents AGI, AGR, AG1-AGN to access database DB1 so that requests and agent invocations can be tracked. In addition, application server 13 provides a servlet container 21, which includes an HTTP-to-JMS translator 23.

Invoker agent AGI responds to incoming JMS messages requesting agent tasks be performed. For a client 31 running on Java-enabled computer AP1, JMS is likely to be native. For clients, such as client 33, communicating over the Internet or other network, translator 23 allows the sender to communicate in HTTP ("hypertext transfer protocol"), which is supported by all web browsers. Translator 23 then converts the HTTP message into JMS, which is read by invoker agent AGI. Translator 23 also handles HTTPS ("HTTP-secure") for secure messaging.

Invoker agent AGI examines each request to identify a specified goal or goals and any data provided pertaining to the goal. Invoker agent AGI stores the request and associated data in agent-request table TR of database DB1. Invoker agent AGI then searches configuration file 15 for an agent that can achieve the specified goal. More specifically, invoker agent AGI searches for an agent that provides the data corresponding to the requested goal.

Then, the required data for the goal-fulfilling agent is examined. If no data is required or if any required data is met by the data accompanying the request, invoker agent AGI sends a JMS message to the goal-fulfilling agent. If there is data required that is not provided in the request, invoker agent AGI searches configuration file 15 for an agent for which the provided-data matches the required data for the goal-fulfilling agent. For example, agent AG1 may provide the data required by goal-fulfilling agent AG2. In that case, invoker agent AGI sends a JMS message to agent AG1, which, so invoked, transmits a JMS message to agent AG2 with the required data. This then invokes agent AG2, which achieves the requested goal.

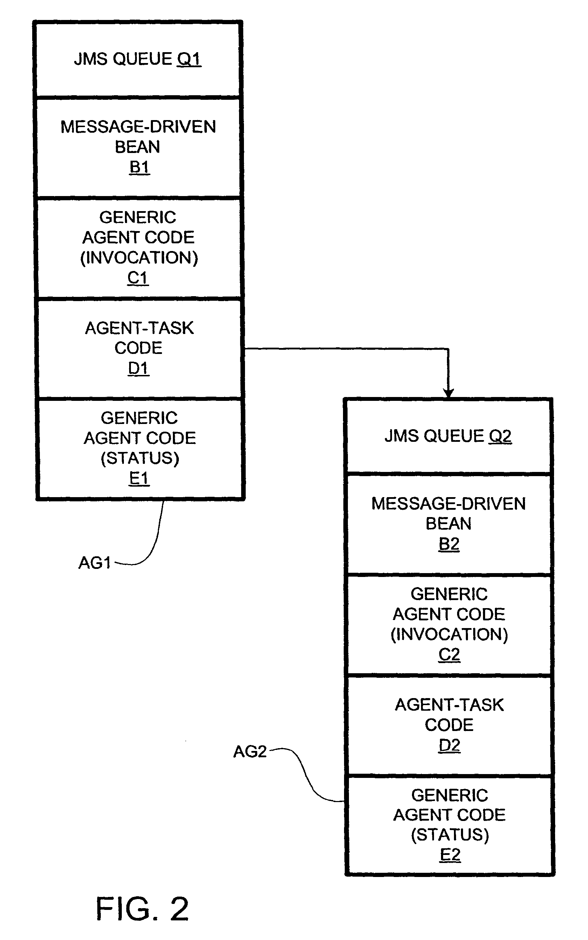

The basic structure of a software agent is shown in FIG. 2 with respect to agents AG1 and AG2. Each agent has a corresponding JMS queue Q1, Q2. Messages are handled serially by respective message-driven beans B1, B2, which pass the messages to generic software-agent code C1, C2. This code performs a number of basic tasks, such as informing the task table that the agent has been invoked. The generic code then activates the application-specific code D1, D2 for the software agent. In the case of agent AG1, this can involve providing data to software agent AG2 in the form of a JMS message. Once the task is complete, further generic software-agent code E1, E2 updates the task status in database DB1.

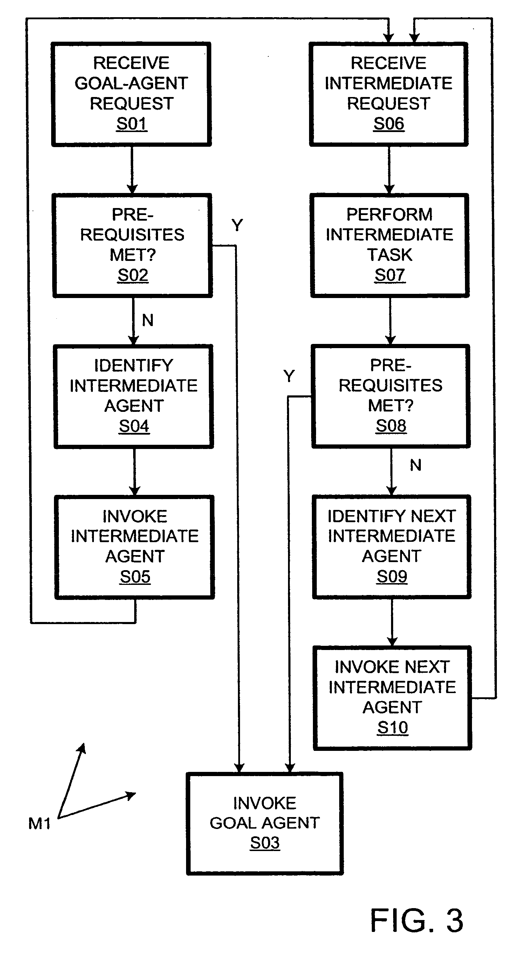

A generalized method M1 in accordance with the present invention is flow-charted in FIG. 3. At step S01, invoker agent AGI receives a JMS message containing a request for an agent to achieve a goal. In addition to specifying the goal agent, the message may contain data required by the goal agent.

At step S02, invoker agent AGI examines configuration file 15 to determine if there are any prerequisites, e.g., data required by the goal agent. If so, invoker agent AGI examines the request message to determine if all prerequisites are met or not. If there are no prerequisites or if all prerequisites for the goal agent are met by the request message, then invoker agent AGI invokes the goal agent at step S03. The goal agent then performs the requested task.

If there are unmet prerequisites, agent invoker AGI examines configuration file 15 for an "intermediate" agent that fulfills an unmet prerequisite at step S04. Assuming one is found, invoker agent AGI transmits a JMS message containing the request data to the intermediate agent at step S05. The message is received by the intermediate agent at step S06. If no such intermediate agent is found, a human-readable notice is generated and transmitted to the proper party.

At step S07, the intermediate agent performs the requested task, which involves adding its "provided data" to any data that came with the request. At step S08, the intermediate agent examines the configuration file to determine if there are any remaining unmet prerequisites of the goal agent. If there are not, the intermediate agent sends a message with the request data and its provided data to the goal agent, thereby invoking it. If there is at least one remaining unmet prerequisite, the intermediate agent examines configuration file for a next-intermediate agent that can fulfill the unmet prerequisite at step S09. Then at S10, the next-intermediate agent is invoked. This invocation of intermediate agents can be iterated as necessary, compiling the data provided by each into messages, until all prerequisites of the goal agent are met. Optionally, the configuration data can specify that two or more intermediate software agents can be invoked in parallel where there are plural unmet prerequisites, Then, the goal agent is invoked at step S03, completing method M1. The operation of the software agents and agent-server software is explained in greater detail below.

Agent server 11 is responsible for coordinating and executing the necessary tasks (*i.e.*, agents) for server-side application handling. Agent server 11 provides a scalable, fail-safe infrastructure for executing a flexible number of loosely coupled agents with varying execution times. The agents and their interactions are predefined.

Agent server 11 is hosted in a J2EE environment supporting EJB ("enterprise Java Beans") 2.0 or higher. Agents are implemented as message-driven beans that provide the desired asynchronous invocation and the EJB container provides the EJB pooling required for scalability. Message-driven beans are built using JMS. The JMS provider, in conjunction with the EJB container, provides reliable message delivery and message transactioning.

Agent server 11 drives off a single, required, configuration file 15. All active agents must register in this file 15. Each agent is minimally described by:

| Agent Configuration Data Table I | |
|---|---|
| **Variable** | **Comment** |
| **Name** | **Required.**<br>**Unique within the server.**<br>**Description:** the name of the agent<br>**Naming:** the name is suffixed with "Agent". Follows java class name capitalization.<br>**Examples:** BillingAgent |
| **Task** | **Required.** 1 or more<br>**Description:** Each agent can perform any number of tasks. Related tasks should be grouped under a single agent as task addition has low overhead whereas agent overhead is higher. A client request consists of an Agent-Task pair. Each task is described by: |
| **name** | **Required.**<br>**Unique within the agent.**<br>**Description:** the name of the agent task.<br>**Naming:** Names should be descriptive but concise. Follows java class name capitalization.<br>**Examples:** SendInvoice, SendReminder |
| **provided-data** | **Required.**<br>**Unique within the server.**<br>**Description:** the data this agent task *provides* to the system. Used in conjunction with required-data (see below).<br>**Naming:** The data-name should be a combination of the agent name (without the "Agent" suffix) and task name. Follows java class name capitalization.<br>**Examples:** BillingSendInvoice, BillingSendReminder |
| **required-data** | **Optional.**<br>**Description:** Ordered list of zero or more "data-names" the agent task required for execution. Agent tasks providing the required data-names will be invoked as necessary, in the specified order, to gather the required data.<br>In addition to agent provided data-names, a task can also reference other registered data-names. |

In addition to agent registration, configuration file 15 also registers all non-agent data-names available for use in the agent server as "required-data", as defined in Table I. Available agents can be invoked using a JMS client message or using an HTTP request (which is translated to a JMS Message). Both invocation methods require the invoker to supply any (registered) required data that cannot be supplied by existing agents.

The agents are instances of J2EE message-driven beans and as such rely on JMS. To insulate the agent developer from the EJB and JMS architecture the agent server provides as much help as possible to the developer. The agent server provides an interface and skeleton class for agent development. Agents are expected to extend the provided class, AbstractAgent, and override the methods in the Agent interface.

Since an agent is a message-driven bean and a message-driven bean is an enterprise java bean, it is necessary for the person deploying the agent to supply the necessary EJB deployment descriptors. Entries in standard XML files describe and register the message-driven beans with the EJB container provided by the J2EE application server.

The Agent Server is an event-driven system with JMS messages serving as events and each agent processing its FIFO event queue. The two invocation methods used by external clients both result in agent invocation requests being placed in the InvokerAgent (event) queue.

The InvokerAgent ensures an AgentData object exists for each new agent invocation request and initializes it as necessary. Note that the AgentData object may exist if the invocation request includes (registered) data. Every agent has access to the AgentData object required for its operation. On successful execution, an agent adds its provided data to the AgentData. On failure, the agent will provide error information to the AgentData. On completion, the agent server will determine whether the invocation request has been completed or it will send a message, with the updated AgentData, to the next required agent.

It is important to understand that the state of an agent invocation request is held in the AgentData object, not in the agents themselves. The agent server invokes agents by applying the processing rules stated in the agent server configuration to the "state" of the AgentData. For example, consider a simple two-agent system with an Agent-A and an Agent-B.

Agent A requires no data to execute, it retrieves current local weather conditions. Agent B requires Agent-A-Data, it is a rule-based agent that determines whether to go outside and play Frisbee.

An invocation request arrives for Agent-B. Invoking Agent-B is the goal. The request arrives with no data. The InvokerAgent invokes Agent-A to satisfy Agent-B's need for data. Agent-A gets the weather information, adds it to the AgentData. The updated AgentData indicates to the agent server that Agent-B can now be invoked. To summarize, for each message/event, the agent server solves the following equation:

$$\text{Goal} + \text{Data} + \text{Process (a.k.a. Configuration)} \rightarrow \text{action}$$

JMS provides the following messaging options that are implemented by the agent server messaging. Agent server uses a point-to-point (P2P), queue-based JMS message model for communication. This means that each message has only one consumer. Message producers send only persistent, auto-acknowledged, non-expiring messages. This means the JMS provider is responsible for maintaining a message until the consumer/agent confirms reception. This handles recovery from a provider failure. Each agent is a message-driven bean and, as such, a JMS message consumer. A JMS queue is defined for each agent. An agent only consumes messages from its associated queue. By being either a transacted or a client-acknowledge consumer, an agent allows the JMS provider to resend messages, e.g., in the event of an agent failure.

There are two parts to the agent server recovery strategy. The first is JMS's guaranteed message delivery. A client successfully requesting agent invocation is assured its request will be received, regardless of system failure. JMS options (via client acknowledgement and/or transacted consumers) allow agents to ensure their processing is complete before confirming that a message has been successfully delivered. In other words, an agent crash will force message redelivery.

For catastrophic crashes, a persistent store is used for recovery purposes. Recovery can be performed at agent server startup, or manually. Every agent request (and its agent data) is stored in the agent database prior to processing. Additionally, each agent invocation is stored in the database. At recovery-time, all non-completed agent requests are restarted, taking into account all associated, successful, agent invocations up to that point. Status information will be stored with each invocation request.

The persistent store will also be used to gather simple statistics about agent invocation and performance. The agent server uses a persistent store for recovery purposes and statistic gathering. Each agent request and agent invocation is stored in the database. Agent data, duration information, and status are updated during processing. Upon successful completion of the agent request the entry is flagged as complete for historical tracking.

| Agent Request Table II | |
|---|---|
| **Variables** | **Comments** |
| REQUEST_ID | Primary Key |
| AGENT_NAME | The requested agent name |
| TASK_NAME | The requested agent task |
| AGENT_DATA | The agent data |
| START_TIME | timestamp for start request processing |
| END_TIME | timestamp for end request processing |
| STATUS | Status of the client request |
| STATUS_DETAIL | Detailed textual description explaining the status |

| Agent Invocation Table III | |
|---|---|
| **Variables** | **Comments** |
| MESSAGE_ID | Foreign Key, PK1 |
| AGENT_NAME | The requested agent name |
| TASK_NAME | The requested agent task |
| START_TIME | timestamp for start agent processing |
| END_TIME | timestamp for end agent processing |
| STATUS | Status of the agent invocation |
| STATUS_DETAIL | Detailed textual description explaining the status |

By way of example, a client application requests an agent task. This sends a persistent, non-expiring JMS message to the InvokerAgent queue. Success requires that the JMS provider is running and an InvokerAgent queue has been created in the JMS provider.

The InvokerAgent consumes the message and prepares for the necessary agent invocation. Success requires that 1) the J2EE application server is running; 2) the agent server is deployed (the agent server configuration is valid and agent EJB deployment descriptors are valid); 3) agents are deployed; and 4) any required non-agent data is supplied

The InvokerAgent records the agent request in the agent server database. Success requires: 1) the agent database is running; 2) the agent server tables are defined; 3) connectivity to the agent database is available; and 4) the agent request is new (i.e., not a resent message).

Invoke each required agent, followed by the requested agent. The database is updated with a status on failure of any agent invocation or success of the requested agent. Upon the success of the requested agent, the task is done.

The illustrated embodiment uses truly independent agents. The goal of this approach is reduced messaging. The fundamental concept is to decentralize process information. In other words, it means embedding an "admin" component in every agent. In an alternative approach, agents respond to invocation messages with completion messages. Thus, all invocations originate with the invoker agent. This centralizes processing logic and simplifies the agents themselves. However, messaging is doubled and the invoker agent can become a bottleneck.

The present embodiment provides several fault-handling features. Instead of forcing the administrator to react to all request failures, the application server is configured to retry failed requests before defaulting to human intervention. See Table IV below for detailed options. These are additional task-element attributes.

| Retry Configuration Data Table IV | | | |
|---|---|---|---|
| **Attribute** | **Legal Values** | **Default** | **Description** |
| retry-num | Integer > 0 | no | Number of times the AS will automatically retry a failed request. Failure past this many tries involves admin intervention. Does not include the original attempt. |
| | 0 | yes | No retry |
| | Integer < 0 | no | Retry will continue indefinitely. |
| retry-interval | Integer $\geq$ 1 | yes, 10 | Minimum time, in minutes, a retry will occur after a previous failure. |
| notification | Never | no | Email is not sent to the administrator on request failure. |
| | FirstFailure | no | Email, if configured, is sent only when the initial request fails. |
| | LastFailure | yes | Email, if configured, is sent only after the last retry fails. |
| | EachFailure | no | Email, if configured, is sent when the initial request fails, and after each failed retry. |

The retry mechanism is ignored if the agent failure results from the agent code throwing an AgentServerFatalException or any Java error. These are considered non-recoverable without human intervention.

The agent server is based on J2EE message-driven beans. This is to say that each agent is a message-driven bean, whose activation is triggered by messages arriving on its associated JMS queue. Message-driven beans depend on the availability and correct operation of its host environment, the J2EE application server, and specifically the EJB container of the application server. The messaging depends on the availability and correct operation of the JMS provider (*i.e.* JMS server). The agent server built-in agents (*e.g.* the InvokerAgent) depend on the availability and correct operation of a supporting database. The application agents depend on external dependencies associated with the application, typically a database and other applications. The environment as a whole depends on the availability and correct operation of the host computer.

The agent server's responsibility for fault tolerance begins with a successfully delivered agent request (as a JMS message). Clients whose requests are not successfully sent due to connectivity issues or unavailability of the JMS server are responsible for handling that situation. If successfully sent the JMS server then guarantees message, and therefore request, delivery. It is up to the agent server to guarantee consumption of the request message. In queue-based messaging the JMS server holds the messages until consumed successfully from the queue, therefore the agent server can guarantee consumption assuming non-excessive down time (which may allow message expiration).

The agent server reads a message from the queue and stores the request in the database as a single transaction. So, the message is not considered delivered (by the JMS server) until it is stored in the agent server database. Once stored in the database the request is available for fault handling, meaning it can be restarted if processing fails. Since all of the request data: AgentName, TaskName, and AgentData are stored, the request can be restarted subsequently from scratch at any time by the agent server. Since the AgentData is updated after the successful conclusion of each agent invocation, requests involving multiple agent invocations can be restarted after the last successful agent invocation.

The agent server has no way of knowing what work an application agent performs. It is the responsibility of the agent code to be able to handle re-invocation. In other words, if a previous, incomplete invocation performed work that could affect re-invocation success it is the responsibility of the agent to handle the re-invocation in a way to ensure success. To aid the agent the agent server provides a mechanism for the agent code to know if this is an original invocation or a re-invocation.

The fault-tolerance scheme uses simple status to guide handling of the request, as set forth in Table V.

| STATUS TABLE V | |
|---|---|
| **Variable** | **Comment** |
| ACTIVE | Assigned on initial database storage of the request. Remains until request processing comes to an end via success or failure. |
| SUCCESS | Assigned on successful completion of the request. |

(continued)

| STATUS TABLE V | |
|---|---|
| **Variable** | **Comment** |
| PENDING | Assigned when an agent invocation fails but an automatic retry is scheduled. The request is not completed. |
| FAILURE | Assigned when an agent invocation fails and requires human intervention. The request is not completed. |
| TERMINATED | Final status for all requests that don't complete successfully. Set when: Administrator terminates a failed request via the admin app. Administrator resubmits a failed request via the admin app. This generates a new request. Automatic retry resubmits a failed request. This generates a new request. |

When the server terminates, whether controlled or unexpected, it is possible for agent invocations to terminate prior to completion. The agent server handles this by automatically restarting requests with status ACTIVE. PENDING requests will be handled by the standard retry mechanism.

An agent request fails to complete normally by either:

1) throwing an Exception other than AgentServerRuntimeException;
2) throwing an Error, or 3) exceeding its set number of retry attempts. In case 3 the request status is set to FAILURE. The string associated with the Exception or Error, is stored along with a detailed description of the problem.

Failed requests are available for inspection via the agent server administration application. This browser-based application displays failed requests and allows an administrator to resubmit or terminate the requests based on the detailed description provided with the failure. The admin application can be deployed on any application server with a JSP/servlet container.

Note that a database failure after the agent request has been successfully stored into the agent server database can be handled just like any other failure, and can be dealt with via the resubmit mechanism. It is not the same problem as discussed in the next section.

The most dangerous point of failure is a database failure while initially storing a request. In other words, the message is successfully popped from the queue but transfer of the request information into the AGENT_REQUEST table fails. A delivered, but not stored message constitutes a lost request. It is imperative that the message contents be stored successfully or the message be redelivered at a later time, hopefully after the database issue has been resolved.

Fault tolerance is accomplished by having the agent server refuse to acknowledge receipt of the message until the request information has been successfully stored. When the database is not reachable, the agent server, specifically the InvokerAgent, goes into a wait/retry loop. This effectively halts message delivery since the InvokerAgent is sleeping. If the application server, or host machine terminates during this time the message has not been acknowledged and therefore the JMS server must redeliver it at a later time. At this time it will be processed successfully or the wait/retry will resume. The retry period is specified in the configuration file and the number of retries is unlimited. Prior to entering a sleep/retry the application server will log an error and, if configured, an e-mail notification will be sent to the administrator.

Application Server startup should be configured to happen automatically at boot time. The database system should be available prior to the start of the application server. In the illustrated embodiment, software agents are invoked serially. Each software agent other than the software agent requested by the original message invokes one successor agent. Alternatively, the configuration data can specify that plural software agents can be invoked in parallel by a common predecessor software agent. This can accelerate achievement of the original request at the cost of additional complexity and computing power. These and other variations upon and modifications to the illustrated embodiments are provided for by the present invention, the scope of which is defined by the following claims.

**Claims**

1. On computer readable media, a computer program set for running in a J2EE environment including an application server (13) and message-driven beans (B1, B2), said program set comprising:

software agents (AG1, AG2, AGN, AGI, AGR), each of which incorporates a respective message-driven bean; configuration data (15) external to said software agents for determining dependencies among said software agents so that an output of a first agent (AGI) of said software agents can serve as an input to a second agent (AG2) of said software agents; and

an agent server (11) for implementing said agents and said dependencies, said agent server being coupled to said application server, said software agents, and said configuration data.

2. A computer program set as recited in Claim 1 wherein said software agents include an invoker agent (AGI) for receiving task requests from a client (33) external to said agent server.

3. A computer program set as recited in Claim 2 wherein said invoker agent selects said second agent for executing a task specified in said task request.

4. A computer program set as recited in Claim 3 wherein said invoker selects said second agent as a function of said configuration data.

5. A computer program set as recited in Claim 3 wherein said invoker agent determines said second agent has a prerequisite for executing said task, said invoker agent determining whether or not said prerequisite is met by said request and

    if said prerequisite is met, invoking said second agent, and

    if said prerequisite is not met, invoking said first agent, said first agent being invoked to meet said prerequisite.

6. A computer program set as recited in Claim 5 wherein said invoker agent selects said first agent as a function of said configuration data.

7. A computer program set as recited in Claim 5 wherein said first agent invokes said second agent once said prerequisite is met.

8. A computer program set as recited in Claim 2 further comprising a database (DB1), said invoker agent storing said request in said database.

9. A computer program set as recited in Claim 8 wherein each of said agents stores its status in said database.

10. A computer program set as recited in Claim 1 wherein said agent server provides for configurable error handling, said configuration data specifying configurations for said error handling.

CLIENT
33

SERVLET
CONTAINER
21

HTTP->JMS
TRANSLATOR
23

CLIENT
31

INVOKER
AGENT
AGI

AGENT AG1
(MDB)

AGENT AG2
(MDB)

AGENT AGN
(MDB)

RETRY
AGENT
AGR

AGENT
CONFIGURATION
FILE 15

AGENT SERVER 11

DATABASE ACCESS LAYER 17

APPLICATION SERVER 13

AGENT
REQUEST
TR

DATABASE
DB1

AGENT
INVOCATION
TI

JAVA-ENABLED COMPUTER AP1

FIG. 1

| JMS QUEUE Q1 |
| --- |
| MESSAGE-DRIVEN BEAN B1 |
| GENERIC AGENT CODE (INVOCATION) C1 |
| AGENT-TASK CODE D1 |
| GENERIC AGENT CODE (STATUS) E1 |

AG1

| JMS QUEUE Q2 |
| --- |
| MESSAGE-DRIVEN BEAN B2 |
| GENERIC AGENT CODE (INVOCATION) C2 |
| AGENT-TASK CODE D2 |
| GENERIC AGENT CODE (STATUS) E2 |

AG2

FIG. 2

RECEIVE
GOAL-AGENT
REQUEST
S01

RECEIVE
INTERMEDIATE
REQUEST
S06

PRE-
REQUISITES
MET?
S02

Y

PERFORM
INTERMEDIATE
TASK
S07

N

IDENTIFY
INTERMEDIATE
AGENT
S04

Y

PRE-
REQUISITES
MET?
S08

N

INVOKE
INTERMEDIATE
AGENT
S05

IDENTIFY NEXT
INTERMEDIATE
AGENT
S09

INVOKE NEXT
INTERMEDIATE
AGENT
S10

M1

INVOKE
GOAL AGENT
S03

FIG. 3